# EUROPÄISCHE PATENTSCHRIFT

(11) **EP 1 923 114 B1**
(45) Veröffentlichungstag und Bekanntmachung des Hinweises auf die Patenterteilung: **01.08.2012**
(21) Anmeldenummer: 06023832.6
(22) Anmeldetag: 16.11.2006
(51) Int. Cl.: B01D 25/176

(54) **Filterelement, insbesondere Filterpressenplatte**
Filterelement, in particular plate for filter press
Élément filtrant, notamment plaque de filtre presse

(43) Veröffentlichungstag der Anmeldung: 21.05.2008
(73) Patentinhaber: Sefar AG, 9410 Heiden (CH)
(72) Erfinder: Dür, Hansjörg, 8803 Rüschlikon (CH); Gaiser, Rick, Depew NY 14043 (US)
(74) Vertreter: Wunderlich, Rainer

(56) Entgegenhaltungen:
- EP-A- 1 264 627
- WO-A-93/18838
- DE-A1- 4 432 004
- GB-A- 2 088 231

## Beschreibung

Die Erfindung betrifft ein Filterelement, insbesondere eine Filterpressenplatte, gemäß dem Oberbegriff des Anspruchs oder 9 Ein derartiges Filterelement ist ausgebildet mit einem Filtermedium, insbesondere einem Filtergewebe, und mindestens einem Halter, an dem das Filtermedium befestigt ist, wobei der Halter einen Haltergrundkörper und einen Halteraufsatz aufweist, wobei das Filtermedium zumindest abschnittsweise zwischen dem Haltergrundkörper und dem Halteraufsatz angeordnet ist, und wobei am Haltergrundkörper und/oder am Halteraufsatz zumindest ein Profilelement zum form- und/oder kraftschlüssigen Halten des Filtermediums ausgebildet ist, wobei das Profilelement als ein Haltedorn ausgebildet ist, der das Filtermedium durchdringt.

Filterpressenplatten für Plattenfilterpressen sind bekannt. Derartige Platten weisen in der Regel eine mittig angeordnete Durchflussöffnung auf, die zum Durchgang der zu filtrierenden Flüssigkeit dient. In der Plattenfilterpresse werden mehrere Filterpressenplatten derart nebeneinander angeordnet und verpresst, dass die Durchflussöffnungen fluchten und einen Kanal bilden, über den die zu filtrierende Flüssigkeit in den Filter zugeführt wird.

Zur Befestigung des Filtermediums im Bereich der Durchflussöffnung ist es bekannt, das Filtermedium mit Teilen eines Filterdurchflussrohres zu vernähen. Dies wird beispielsweise in der US 4,053,416 und der US 6,971,526 B2 gelehrt. Ferner ist es bekannt, das Filtermedium stoffschlüssig, insbesondere durch Induktionsschweißen, mit dem Durchflussrohr zu verbinden, was beispielsweise aus der US 5,958,173, der US 6,932,906 B2, der US 4,765,859 und der US 4,931,178 hervorgeht. Die US 6,007,717 offenbart darüber hinaus, ein Flanschelement zum Halten des Filtertuchs zu deformieren.

Die EP 1 264 627 A1 und die DE 44 32 004 A1 offenbaren Vorrichtungen zur Befestigung von Filtermedien, welche mit Nadeln versehen sind. Die Nadeln durchstechen die Filtermedien und sind an ihren Enden in korrespondierenden Löchern aufgenommen.

**Aufgabe** der Erfindung ist es, ein Filterelement zur Verfügung zu stellen, bei dem eine einfache und zuverlässige Befestigung eines Filtermediums an einem Halter gegeben ist.

Die Aufgabe wird erfindungsgemäß durch ein Filterelement mit den Merkmalen des Anspruchs 1 oder 9 gelöst. Bevorzugte Ausführungsbeispiele sind in den abhängigen Ansprüchen angegeben.

Beim erfindungsgemäßen Filterelement ist vorgesehen, dass der Halter einen Haltergrundkörper und einen Halteraufsatz aufweist, dass das Filtermedium zumindest abschnittsweise zwischen dem Haltergrundkörper und dem Halteraufsatz angeordnet ist, und dass am Haltergrundkörper und/oder am Halteraufsatz zumindest ein Profilelement zum form- und/oder kraftschlüssigen Halten des Filtermediums ausgebildet ist.

Ein Grundgedanke der Erfindung kann darin gesehen werden, den Halter mehrteilig auszuführen und das Filtermedium zwischen den Teilen des Halters form- und/oder kraftschlüssig zu befestigen. Erfindungsgemäß kann das Filterelement so ausgebildet werden, dass der Form- und/oder Kraftschluss zum Halten des Filtermediums beim Zusammenfügen des Haltergrundkörpers mit dem Halteraufsatz hergestellt wird. Verglichen mit einer genähten oder verschweißten Anordnung erlaubt es dieser erfindungsgemäße Gedanke, die Verbindung zwischen Filtermedium und Halter unter besonders geringem Werkzeugeinsatz herzustellen, so dass eine besonders hohe Wirtschaftlichkeit gegeben ist. Insbesondere kann dies unabhängig vom Material und der Dicke des Filtermediums erfolgen. Gleichzeitig erlaubt die Erfindung eine besonders zuverlässige und dauerhafte Halterung des Filtermediums am Halter, da der Halter im Bereich der form - und/oder kraftschlüssigen Verbindung auf beiden Flachseiten des Filtermediums angeordnet ist und somit die form- und/oder kraftschlüssige Verbindung schützt. Für einen besonders sicheren Form- und/oder Kraftschluss ist erfindungsgemäß zumindest ein Profilelement vorgesehen, das mit dem Filtermedium in Kontakt steht.

Bei dem erfindungsgemäßen Filtermedium kann es sich insbesondere um ein Filtergewebe handeln. Zusätzlich oder alternativ kann jedoch auch beispielsweise eine Filtermembran, ein Filtervlies oder ein anderer Typ Filtertuch vorgesehen sein.

Vorzugsweise ist nach der Erfindung eine Vielzahl von Profilelementen vorgesehen, die in ihrer Bemaßung und/oder ihrem Wirkungsprinzip identisch aber auch unterschiedlich ausgebildet sein können. Die Profilelemente können entweder am Haltergrundkörper oder am Halteraufsatz oder auch an beiden Halterteilen angeordnet sein. Geeigneterweise sind der Haltergrundkörper und der Halteraufsatz im Bereich des dazwischen aufgenommenen Filtermediums flächig ausgebildet.

Eine besonders zuverlässige formschlüssige Verbindung zwischen Filtermedium und Halter wird dadurch erreicht, dass das Profilelement als ein Haltedorn ausgebildet ist, der das Filtermedium durchdringt, insbesondere durchsticht. Insbesondere um eine besonders dichte und beständige Halterung zu gewährleisten, ist es vorteilhaft, dass der Durchmesser des Haltedorns kleiner ist als die Maschenweite des Filtergewebes. Ferner ist es vorteilhaft, dass der Haltedorn spitz zuläuft und insbesondere konisch ausgebildet ist. Hierdurch wird das Durchstechen des Filtermediums und somit die Montage erleichtert. Geeigneterweise ist der Haltedorn so dimensioniert, dass er das Filtergewebe durchdringt, aber nicht beschädigt. Insbesondere kann der Dorn so dimensioniert sein, dass er die Masche des Filtergewebes, die er durchdringt, aufweitet. Es kann auch vorgesehen sein, dass der Haltedorn durch eine, z.B. durch Laserschnitt, vorher eingebrachte Ausnehmung im Filtermedium hindurchragt. Insbesondere in diesem Fall sind auch nicht spitz zulaufende Ausgestaltungen des Dornes denkbar.

Bevorzugt ist es nach der Erfindung, dass das Profilelement als Profilvorsprung ausgebildet ist, der am Haltergrundkörper oder am Halteraufsatz vorsteht, und dass am Halteraufsatz beziehungsweise am Haltergrundkörper eine korrespondierende Vertiefung und/oder ein korrespondierendes Gegenstück vorgesehen ist, in welche beziehungsweise in welches das Profilelement eingreift und/oder hineinragt. Hierdurch wird die Zuverlässigkeit der Halterung weiter erhöht. Insbesondere kann das Profilelement widerhakenartig ausgebildet sein. Das korrespondierende Gegenstück kann auch vorstehend am Halteraufsatz beziehungsweise am Haltergrundkörper angeordnet sein.

Ferner ist es vorteilhaft, dass das Filtermedium im Bereich des Halters zumindest einmal abgewinkelt ist. Auch hierdurch kann die Zuverlässigkeit der Halterung des Filtermediums am Halter verbessert werden. Vorzugsweise ist das Filtermedium im Querschnitt um einen Winkel von 90° oder mehr abgewinkelt. Das Filtermedium kann insbesondere am Profilelement abgewinkelt sein. In diesem Fall ist es vorteilhaft, dass die Abmessungen des Profilelementes so gewählt sind, dass das Filterelement das Profilelement umschlingt und nicht von diesem durchstochen wird. Insbesondere können die Abmessungen des Profilelementes hierzu größer als die Maschenweite des Filtergewebes sein.

An dem Halter können nach der Erfindung auch mehrere unterschiedlich ausgeführte Profilelemente mit unterschiedlicher Funktionalität ausgebildet sein. Beispielsweise können an demselben Halter sowohl vergleichsweise kleine Haltedorne vorgesehen sein, die das Filterelement durchstehen, als auch größer dimensionierte Profilelemente, um die das Filtermedium herumgeführt ist. Ein Profilelement kann ferner mit einer doppelten Funktionalität versehen sein, bei der es in einem Bereich dafür ausgebildet ist, das Filterelement zu durchstechen, und in einem anderen Bereich dafür ausgebildet ist, das Filterelement abzuwinkeln. Beispielsweise kann das Filterelement im Spitzenbereich eines Dornes von diesem durchstochen werden und im Fußbereich abgewinkelt werden.

Darüber hinaus ist es nach der Erfindung vorteilhaft, dass der Haltergrundkörper und/oder der Halteraufsatz ringförmig ausgebildet sind. Dies ist insbesondere dann vorteilhaft, wenn das Filtermedium im Bereich einer Durchgangsöffnung, insbesondere im Bereich eines Filterdurchflussrohres, einer Filterpressenplatte angeordnet ist.

Ferner ist es nach der Erfindung vorgesehen, dass zumindest ein Profilelement Mittel zum Verbinden des Haltergrundkörpers mit dem Halteraufsatz aufweist. Somit kommt dem Profilelement eine Doppelfunktion zu. Einerseits dient es der Halterung des Filtermediums am Halter, andererseits zum Zusammenhalten der einzelnen Teile des Halters untereinander. Beispielsweise kann am Profilelement stirnseitig ein Schnappelement vorgesehen sein, das einen Schnappverschluss zwischen Haltergrundkörper und Halteraufsatz bildet. Soweit mehrere Profilelemente vorgesehen sind, kann eines oder mehrere dieser Elemente Mittel zum Verbinden des Haltergrundkörpers mit dem Halteraufsatz aufweisen. Grundsätzlich kann die durch die Mittel zum Verbinden hergestellte Verbindung eine formschlüssige, eine kraftschlüssige und/oder eine stoffschlüssige Verbindung sein, wobei ein Stoffschluss oder ein Formschluss besonders bevorzugt ist.

Erfindungsgemäß ist es, dass der Haltergrundkörper und der Halteraufsatz über zumindest einen Haltedorn verschweißt und/oder verklebt sind. Beispielsweise kann am Haltergrundkörper zumindest ein Haltedorn vorstehen, der das Filtermedium durchdringt und auf seiner dem Haltergrundkörper abgewandten Seite mit dem Halteraufsatz verschweißt oder verklebt ist. Zusätzlich oder alternativ kann am Halteraufsatz zumindest ein Haltedorn vorgesehen sein, der das Filtergewebe durchdringt und auf seinem dem Halteraufsatz abgewandten Ende mit dem Haltergrundkörper stoffschlüssig verbunden ist.

Die Herstellung eines derartigen Filterelementes kann beispielsweise dadurch erfolgen, dass zunächst das Filtermedium zwischen Haltergrundkörper und Halteraufsatz eingelegt wird, wobei das zumindest eine Profilelement bevorzugt das Filtermedium zumindest teilweise durchdringt, und anschließend die stoffschlüssige Verbindung zwischen Haltergrundkörper und Halteraufsatz am Profilelement hergestellt wird.

Ferner ist es nach der Erfindung vorteilhaft, dass das Filtermedium mit dem Halter stoffschlüssig verbunden ist, insbesondere verschweißt und/oder verklebt ist. Gemäß dieser Ausführungsform ist zusätzlich zum Form- und/oder Kraftschluss durch das Profilelement noch ein Stoffschluss zwischen Filtermedium und Halter gegeben. Hierdurch wird eine besonders zuverlässige Befestigung des Filtermediums am Halter gewährleistet.

Grundsätzlich kann das Filterelement bei verschiedenen Filtertypen zum Einsatz kommen. Beispielsweise kann das Filterelement für einen Bandfilter, Trommelfilter und/oder Blattfilter vorgesehen sein. Vorteilhafterweise ist das Filterelement jedoch als Filterpressenplatte ausgebildet. Der Halter kann dabei insbesondere zur Befestigung des Filtermediums im Bereich einer Filterdurchflussöffnung der Filterpressenplatte vorgesehen sein. Vorzugsweise ist der Halter an einem Filterdurchflussrohr der Filterpressenplatte ausgebildet.

Insbesondere bei einem Einsatz als Filterpressenplatte ist es vorteilhaft, dass das Filtermedium mit zumindest einem Loch versehen ist und dass das Filtermedium im Bereich des Lochs am Halter befestigt ist. Insbesondere kann das Loch fluchtend mit der Filterdurchflussöffnung und/oder dem Filterdurchflussrohr angeordnet sein.

Das Loch wird geeigneterweise durch ein Laserschnittverfahren oder durch ein Ultraschallschnittverfahren hergestellt. Für eine einfache und zuverlässige Verbindung kann eine gute Kantenqualität von hoher Bedeutung sein.

Insbesondere bei einem Einsatz als Filterband für Bandfilter ist es vorteilhaft, dass der Halter länglich ausgebildet ist und/oder sich längs zumindest einer Kante des Filtermediums erstreckt. Vorzugsweise kann der Halter als Teil eines Bandverschlusses für das Filterband und/oder eines seitlichen Führungselementes für das Filterband ausgebildet sein.

Die Erfindung umfasst auch ein Verfahren zum Filtrieren einer Flüssigkeit, das sich dadurch auszeichnet, dass die Flüssigkeit durch ein Filtermedium eines erfindungsgemäßen Filterelementes geleitet wird.

Nach der Erfindung kann der Halter insbesondere geteilt ausgebildet sein. Der Kraftschluss zwischen dem Halter und dem Filtermedium kann beispielsweise durch Umschlingungsreibung und/oder durch mechanische Verkrallung und/oder durch Verklemmung erzeugt werden.

Die Erfindung wird nachfolgend anhand bevorzugter Ausführungsbeispiele näher erläutert, die in den Figuren dargestellt sind. In den Figuren zeigen schematisch:
- Figuren 1 bis 6: geschnittene Teilansichten verschiedener Ausführungsbeispiele von Filterelementen;
- Fig. 7: eine Draufsicht auf den Haltergrundkörper des Ausführungsbeispiels der Fig. 2;
- Figuren 8 und 9: geschnittene Teilansichten weiterer Ausführungsbeispiele erfindungsgemäßer Filterelemente; und
- Figuren 10 und 11: perspektivische Ansichten weiterer Ausführungsbeispiele erfindungsgemäßer Filterelemente zur Verdeutlichung der Anordnung und Ausführung des Halters.

Gleich wirkende Elemente sind in den Figuren mit denselben Bezugszeichen gekennzeichnet.

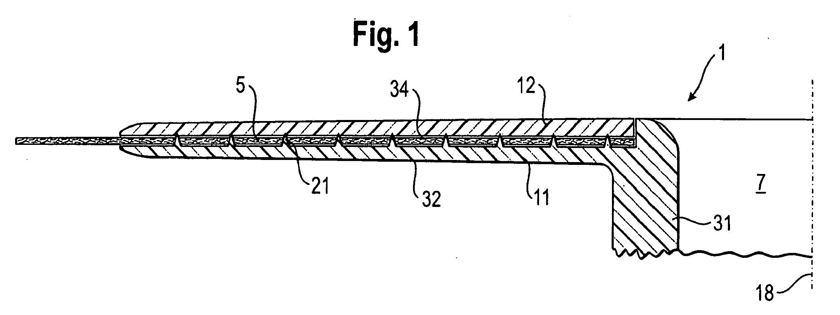

Ein erstes Ausführungsbeispiel eines erfindungsgemäßen Filterelementes ist ausschnittsweise in Fig. 1 dargestellt. Das Filterelement ist als Filterpressenplatte für einen Plattenfilter ausgebildet. Das Filterelement weist einen Halter 1 auf, der zum Befestigen eines als Filtertuch ausgebildeten Filtermediums 5 vorgesehen ist. Der Halter 1 ist im Bereich einer Durchgangsöffnung 7 für die zu filtrierende Flüssigkeit angeordnet und ringförmig um die Längsachse 18 der Durchgangsöffnung 7 herum ausgebildet.

Der Halter 1 ist zweiteilig und weist einen Haltergrundkörper 11 sowie einen Halteraufsatz 12 auf. Der Haltergrundkörper 11 wiederum weist einen Rohrabschnitt 31 und einen Flanschabschnitt 32 auf. Der Rohrabschnitt 31 bildet ein Filterdurchflussrohr, in dem die Durchgangsöffnung 7 für das zu filtrierende Medium ausgebildet ist. Der Flanschabschnitt 32 ist stirnseitig am Rohrabschnitt 31 vorgesehen und ringscheibenartig ausgebildet. Der Halteraufsatz 12 ist ebenfalls ringscheibenartig ausgebildet. Der ringscheibenartige Halteraufsatz 12 und der ringscheibenartige Flanschabschnitt 32 des Haltergrundkörpers 11 sind mit gegenüberliegenden Flachseiten fluchtend angeordnet. Zwischen dem Haltergrundkörper 11 und dem Halteraufsatz 12 ist im Bereich des Flanschabschnittes 32 ein ringförmiger Schlitz 34 gebildet. In diesem ist das Filtermedium 5 aufgenommen.

Am Flanschabschnitt 32 des Haltergrundkörpers 11 stehen eine Vielzahl von Haltedorne 21 ab, die sich zum gegenüberliegenden Halteraufsatz 12 hin erstrecken. Diese durchdringen das als Gewebe ausgebildete Filtermedium 5 ohne es zu beschädigen, was insbesondere mit einer Aufweitung der Maschen des Filtermediums 5 einhergehen kann. Hierdurch wird eine formschlüssige Verbindung zwischen dem Filtermedium 5 und den Haltedornen 21 und somit dem Flanschabschnitt 32 des Haltergrundkörpers 11 geschaffen.

Der als Fixierring ausgebildete Halteraufsatz 12 ist an den Spitzen der Haltedorne 21 angeordnet und fixiert das Filtermedium 5 an den Haltedornen 21 und somit dem Haltergrundkörper 11. Der Halteraufsatz 12 ist an den Spitzen der Haltedorne 21 mit diesen schmelzverklebt, das heißt verschweißt, so dass der Halteraufsatz 12 an den Haltedornen 21 und somit am Haltergrundkörper 11 festgelegt ist. Zum einfachen Herstellen der Schmelzverklebung sind der Halteraufsatz 12 und die Haltedorne 21, aber auch der Flanschabschnitt 32, aus einem thermoplastischen Material, insbesondere aus einem thermoplastischen Elastomer, gefertigt.

Bei der Herstellung des Filterelementes wird geeigneterweise zunächst das Filtermedium 5 auf die Haltedorne 21 aufgesteckt, und anschließend werden der Halteraufsatz 12 und der Haltergrundkörper 11 über die Haltedorne 21 schmelzverklebt.

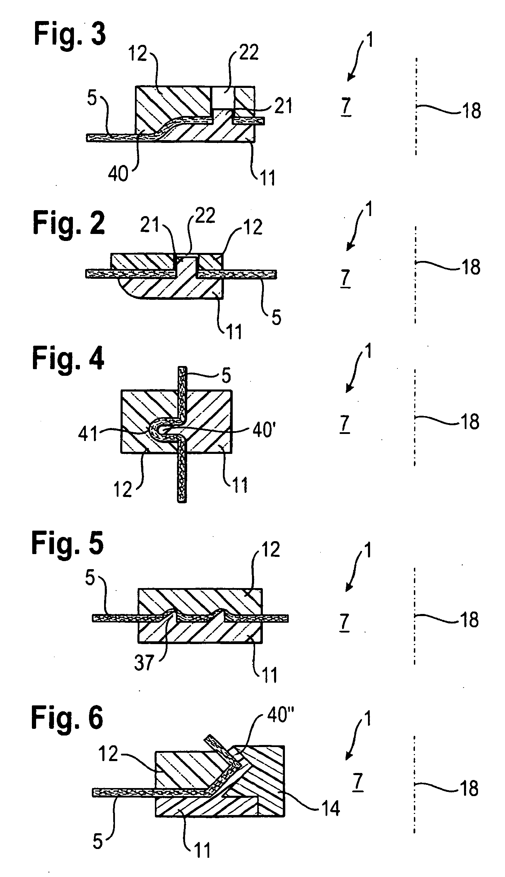

Ein weiteres Ausführungsbeispiel eines erfindungsgemäßen Filterelementes im Bereich des Halters 1 ist in Fig. 2 dargestellt. Wie beim Ausführungsbeispiel der Fig. 1 ist auch beim Ausführungsbeispiel der Fig. 2 am Haltergrundkörper 11 ein Haltedorn 21 vorgesehen, der das Filtermedium 5 durchsticht und somit einen Formschluss zwischen Filtermedium 5 und Halter 1 herstellt. Im Falle des Ausführungsbeispiels der Fig. 2 ist im Halteraufsatz 12 zusätzlich eine Ausnehmung 22 vorgesehen, die mit dem Haltedorn 21 korrespondiert und in die der Haltedorn 21 eingreift.

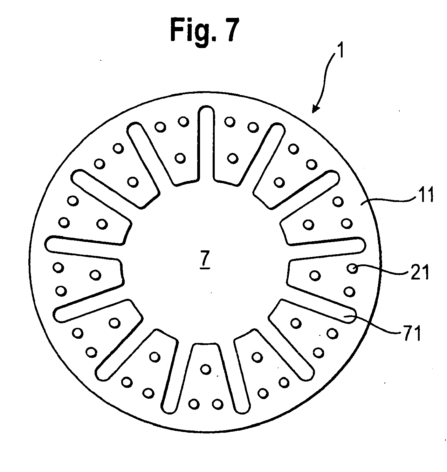

Der Halter 1 der Fig. 2, der in Fig. 2 nur abschnittsweise dargstellt ist, ist in Fig. 7 in Draufsicht gezeigt, wobei zur besseren Erkennbarkeit in Fig. 7 der Halteraufsatz 12 und das Filtermedium 5 nicht dargestellt sind. Wie Fig. 7 zu entnehmen ist, sind am ringförmigen Haltergrundkörper 11 eine Vielzahl von Haltedornen 21 um die Durchgangsöffnung 7 herum angeordnet. Ferner sind am Haltergrundkörper 11 eine Vielzahl radialer Durchgangskanäle 71 zum radialen Durchtritt der zu filtrierenden Flüssigkeit vorgesehen.

Ein weiteres Ausführungsbeispiel eines erfindungsgemäßen Filterelements mit Halter 1 ist in Fig. 3 dargestellt. Wie auch der Halter 1 der Fig. 2 weist der Halter 1 der Fig. 3 einen Haltedorn 21 auf, der in eine korrespondierende Ausnehmung 22 im Halteraufsatz 12 hineinragt und der das Filtermedium 5 durchsticht. Darüber hinaus ist im Ausführungsbeispiel der Fig. 3 noch ein Profilvorsprung 40 vorgesehen, um den das Filtermedium 5 herumgeführt ist und an dem zwischen Haltergrundkörper 11 und Halteraufsatz 12 ein zusätzlicher Kraftschluss gebildet ist.

Beim Ausführungsbeispiel der Fig. 4 ist am Haltergrundkörper 11 ein als Profilvorsprung 40' ausgebildetes Profilelement vorgesehen, das in eine korrespondierende Ausnehmung 41 am Halteraufsatz 12 hineinragt. Im Bereich der Ausnehmung 41 ist das Filtermedium 5 um den Profilvorsprung 40' herumgeführt und hierbei ein Kraftschluss mit dem Filtermedium 5 gebildet.

Beim Ausführungsbeispiel der Fig. 5 sind am Haltergrundkörper 11 spitz zulaufende Krallen 37 vorgesehen. Im Bereich ihrer Spitze durchstechen die Krallen 37 das Filtermedium 5. Im breiteren Fußbereich der Krallen 37 ist das Filtermedium 5 um die Krallen 37 herumgeführt.

Beim Ausführungsbeispiel der Fig. 6 ist am Haltergrundkörper 11 ein als abgewinkelter Profilvorsprung 40" ausgebildetes Profilelement vorgesehen. An diesem Profilvorsprung 40" ist das Filtermedium 5 entlang geführt und zum Herstellen einer besonders festen Verbindung zwischen Halter 1 und Filtermedium 5 abgewinkelt. Gleichzeitig bildet der Profilvorsprung 40'' einen Schnappverschluss zwischen Haltergrundkörper 11 und Halteraufsatz 12. Zum Sichern dieses Schnappverschlusses weist der Halter 1 ein weiteres ringförmiges Element 14 auf, das auf der dem Halteraufsatz 12 abgewandten Seite des Profilvorsprunges 40" angeordnet ist.

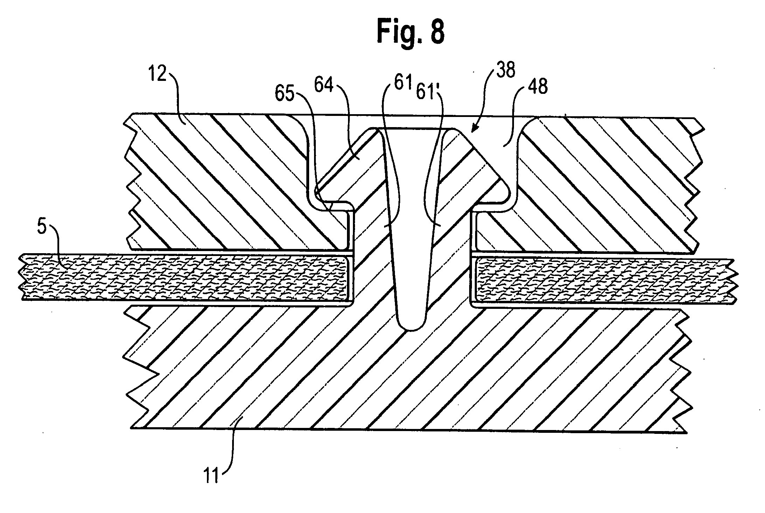

Ein weiteres Ausführungsbeispiel eines erfindungsgemäßen Filterelementes ist in Figur 8 dargestellt. Beim Ausführungsbeispiel der Figur 8 ist am Haltergrundkörper 11 ein als Schnappverschlusselement 38 ausgebildetes Profilelement vorgesehen. Dieses Schnappverschlusselement 38 steht durch eine Ausnehmung im Filtermedium 5 durch, wodurch das Filtermedium 5 formschlüssig gehalten wird, und greift in eine weitere Ausnehmung 48 im Halteraufsatz 12 ein.

Das Schnappverschlusselement 38 weist zwei biegsame Schenkel 61, 61' auf, die jeweils kopfseitig ein Hakenelement 64 aufweisen. Die Hakenelemente 64 der beiden Schenkel 61, 61' halten das Schnappverschlusselement 38 zusammen mit dem Haltergrundkörper 11 formschlüssig am Halteraufsatz 12. Insbesondere weist der Halteraufsatz 12 im Bereich der Ausnehmung 38 eine Hinterschneidung 65 auf, an der die Hakenelemente 64 eingreifen.

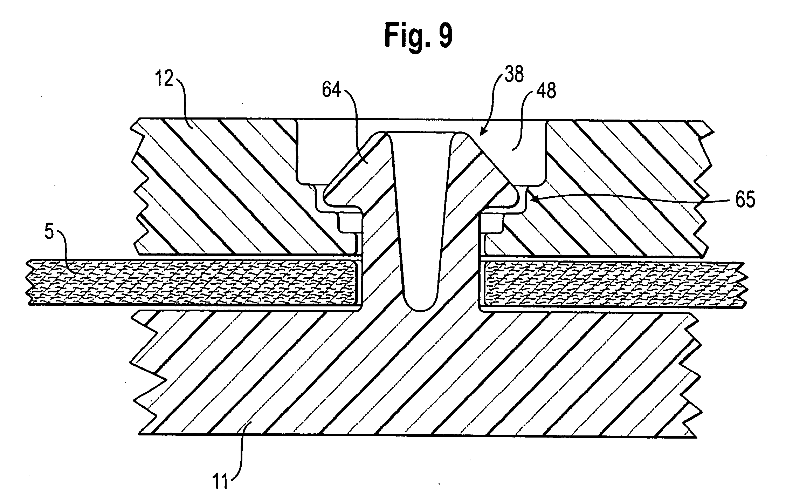

Ein weiteres Ausführungsbeispiel eines erfindungsgemäßen Filterelementes ist in Figur 9 dargestellt. Das Ausführungsbeispiel der Figur 9 erlaubt es, den Haltergrundkörper 11 und den Halteraufsatz 12 unter verschiedenem Abstand zueinander miteinander zu verrasten. Hierdurch kann der Halter bei verschieden dicken Filtermedien 5 zum Einsatz kommen.

Um die Verrastung bei unterschiedlichem Abstand zu erlauben, ist beim Ausführungsbeispiel der Figur 9 die Hinterschneidung 65 gestuft ausgebildet, wobei der Durchmesser der Ausnehmung 48 mit zunehmendem Abstand vom Haltergrundkörper 11 nach außen hin zunimmt. Hierdurch sind mehrere Rastpositionen für die Hakenelemente 64 des Schnappverschlusselementes 38 gebildet.

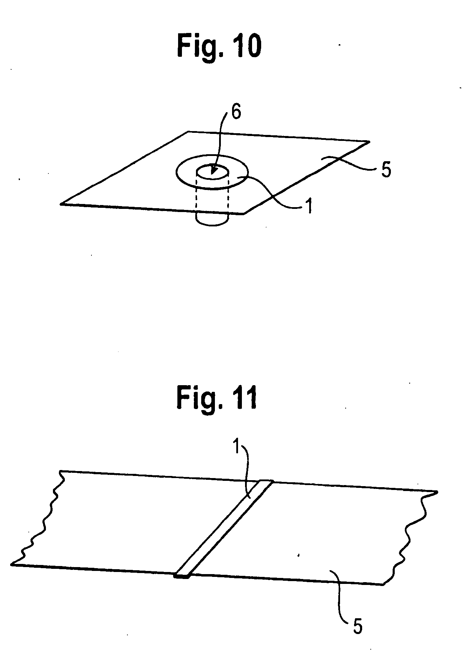

Weitere Ausführungsbeispiele erfindungsgemäßer Filterelemente sind in den Figuren 10 und 11 dargestellt. Beim Ausführungsbeispiel der Figur 10 ist der Halter 1 als Flanschelement ausgebildet, der im Bereich eines Loches 6 des Filtermediums 5 am Filtermedium 5 angeordnet ist. Insbesondere kann der Halter 1 hierbei als Durchführungsarmatur einer Filterpressenplatte ausgebildet sein.

Beim Ausführungsbeispiel der Figur 11 ist das Filterelement 5 als Filterband ausgebildet und der Halter 1 bildet einen länglichen Bandverschluss, der benachbarte Enden des Filtermediums 5 verbindet. Hierzu ist der Halter 1 länglich und an gegenüberliegenden Stirnseiten des Filtermediums 5 ausgebildet.

## Patentansprüche

1. Filterelement mit
- einem Filtermedium (5), insbesondere einem Filtergewebe, und
- mindestens einem Halter (1), an dem das Filtermedium (5) befestigt ist,
- wobei der Halter (1) einen Haltergrundkörper (11) und einen Halteraufsatz (12) aufweist,
- wobei das Filtermedium (5) zumindest abschnittsweise zwischen dem Haltergrundkörper (11) und dem Halteraufsatz (12) angeordnet ist, und
- wobei am Haltergrundkörper (11) und/oder am Halteraufsatz (12) zumindest ein Profilelement zum form- und/oder kraftschlüssigen Halten des Filtermediums (5) ausgebildet ist, wobei das Profilelement als ein Haltedorn (21) ausgebildet ist, der das Filtermedium (5) durchdringt,
**dadurch gekennzeichnet,**
**dass** das Profilelement Mittel zum Verbinden des Haltergrundkörpers (11) mit dem Halteraufsatz (12) aufweist, wobei der Haltergrundkörper (11) und der Halteraufsatz (12) über das Profilelement verklebt und/oder verschweißt sind.

2. Filterelement nach Anspruch 1,
**dadurch gekennzeichnet,**
**dass** das Profilelement als Profilvorsprung (40) ausgebildet ist, der am Haltergrundkörper (11) und/oder am Halteraufsatz (12) vorsteht, und
**dass** am Halteraufsatz (12) beziehungsweise am Haltergrundkörper (11) eine korrespondierende Ausnehmung (22, 41) und/oder ein korrespondierendes Gegenstück vorgesehen ist, in welche beziehungsweise in welches das Profilelement eingreift.

3. Filterelement nach einem der vorstehenden Ansprüche,
**dadurch gekennzeichnet,**
**dass** das Filtermedium (5) im Bereich des Halters (1) zumindest einmal abgewinkelt ist.

4. Filterelement nach einem der vorstehenden Ansprüche,
**dadurch gekennzeichnet,**
**dass** der Haltergrundkörper (11) und/oder der Halteraufsatz (12) ringförmig ausgebildet sind.

5. Filterelement nach einem der vorhergehenden Ansprüche,
**dadurch gekennzeichnet,**
**dass** das Filtermedium (5) mit dem Halter (1) stoffschlüssig verbunden ist, insbesondere verschweißt und/oder verklebt ist.

6. Filterelement nach einem der vorstehenden Ansprüche,
**dadurch gekennzeichnet,**
**dass** es als Filterpressenplatte ausgebildet ist und/oder dass der Halter (1) an einem Filterdurchflussrohr angeordnet ist.

7. Filterelement nach einem der vorstehenden Ansprüche,
**dadurch gekennzeichnet,**
**dass** das Filtermedium (5) mit zumindest einem Loch (6) versehen ist und dass das Filtermedium (5) im Bereich des Lochs (6) am Halter (1) befestigt ist.

8. Filterelement nach einem der vorstehenden Ansprüche,
**dadurch gekennzeichnet,**
**dass** der Halter (1) länglich ausgebildet ist und/oder sich längs zumindest einer Kante des Filtermediums (5) erstreckt.

9. Filterelement mit
- einem Filtermedium (5), insbesondere einem Filtergewebe, und
- mindestens einem Halter (1), an dem das Filtermedium (5) befestigt ist,
- wobei der Halter (1) einen Haltergrundkörper (11) und einen Halteraufsatz (12) aufweist,
- wobei das Filtermedium (5) zumindest abschnittsweise zwischen dem Haltergrundkörper (11) und dem Halteraufsatz (12) angeordnet ist, und
- wobei am Haltergrundkörper (11) und/oder am Halteraufsatz (12) zumindest ein Profilelement zum form- und/oder kraftschlüssigen Halten des Filtermediums (5) ausgebildet ist, wobei das Profilelement als ein Haltedorn (21) ausgebildet ist, der das Filtermedium (5) durchdringt,
**dadurch gekennzeichnet,**
**dass** das Profilelement Mittel zum Verbinden des Haltergrundkörpers (11) mit dem Halteraufsatz (12) aufweist, wobei das Profilelement widerhakenartig als Profilvorsprung ausgebildet ist, der am Haltergrundkörper (11) und/oder am Halteraufsatz (12) vorsteht, und
**dass** am Halteraufsatz (12) beziehungsweise am Haltergrundkörper (11) eine korrespondierende Ausnehmung (22, 41) und/oder ein korrespondierendes Gegenstück vorgesehen ist, in welche beziehungsweise in welches das widerhakenartige Profilelement eingreift.

10. Verfahren zum Filtrieren einer Flüssigkeit,
**dadurch gekennzeichnet,**
**dass** die Flüssigkeit durch ein Filtermedium (5) eines Filterelemente nach einem der vorstehenden Ansprüche geleitet wird.

## Claims

1. Filter element with
- a filter medium (5), in particular a filter fabric, and
- at least one retainer (1) to which the filter medium (5) is fixed,
- wherein the retainer (1) comprises a retainer base body (11) and a retainer attachment (12),
- wherein the filter medium (5) is arranged between the retainer base body (11) and the retainer attachment (12) at least in sections, and
- wherein at least one profile element is formed on the retainer base body (11) and / or on the retainer attachment (12) for the form-fitting and / or force-fitting retention of the filter medium (5), wherein the profile element is formed as a retaining mandrel (21) which penetrates the filter medium (5),
**characterised in that**
the profile element comprises means for connecting the retainer base body (11) to the retainer attachment (12), wherein the retainer base body (11) and the retainer attachment (12) are welded and / or glued via the profile element.

2. Filter element according to claim 1,
**characterised in that**
the profile element is in the form of a profiled protrusion (10) which protrudes on the retainer base body (11) and / or on the retainer attachment (12), and
that a corresponding recess (22, 41) and / or a corresponding counterpart is / are provided on the retainer attachment (12) or on the retainer base body (11), respectively, into which the profile element engages.

3. Filter element according to one of the preceding claims,
**characterised in that**
the filter medium (5) is bent at least once in the region of the retainer (1).

4. Filter element according to one of the preceding claims,
**characterised in that**
the retainer base body (11) and / or the retainer attachment (12) are formed annularly.

5. Filter element according to one of the preceding claims,
**characterised in that**
the filter medium (5) is connected in a material-locking way, particularly being welded and / or glued, to the retainer (1).

6. Filter element according to one of the preceding claims,
**characterised in that**
it is formed as a filter press plate and / or that the retainer (1) is arranged on a filter passage tube.

7. Filter element according to one of the preceding claims,
**characterised in that**
the filter medium (5) is provided with at least one hole (6) and that the filter medium (5) is fixed in the region of the hole (6) to the retainer (1).

8. Filter element according to one of the preceding claims,
**characterised in that**
the retainer (1) is elongated and / or extends along at least one edge of the filter medium (5).

9. Filter element with
- a filter medium (5), in particular a filter fabric, and
- at least one retainer (1) to which the filter medium (5) is fixed,
- wherein the retainer (1) comprises a retainer base body (11) and a retainer attachment (12),
- wherein the filter medium (5) is arranged between the retainer base body (11) and the retainer attachment (12) at least in sections, and
- wherein at least one profile element is formed on the retainer base body (11) and / or on the retainer attachment (12) for the form-fitting and / or force-fitting retention of the filter medium (5), wherein the profile element is formed as a retaining mandrel (21) which penetrates the filter medium (5),
**characterised in that**
the profile element comprises means for connecting the retainer base body (11) to the retainer attachment (12), wherein the profile element is formed as profiled protrusion like a barbed hook which protrudes on the retainer base body (11) and / or on the retainer attachment (12), and
that a corresponding recess (22, 41) and / or a corresponding counterpart is / are provided on the retainer attachment (12) or on the retainer base body (11), respectively, into which the barbed hook-liked profile element engages.

10. Method for filtering a liquid,
**characterised in that**
the liquid is passed through a filter medium (5) of a filter element according to one of the preceding claims.

## Revendications

1. Élément filtrant avec
- un milieu filtrant (5), en particulier un textile filtrant, et
- au moins un support (1) sur lequel est fixé le milieu filtrant (5),
- dans lequel le support (1) présente un corps de base (11) de support et une partie rapportée (12) de support,
- dans lequel le milieu filtrant (5) est placé au moins par sections entre le corps de base (11) de support et la partie rapportée (12) de support, et
- dans lequel sur le corps de base (11) de support et/ou la partie rapportée (12) de support est formé au moins un élément profilé pour tenir le milieu filtrant (5) par engagement positif et/ou par adhérence, l'élément profilé étant conformé en ergot de maintien (21) qui traverse le milieu filtrant (5),
***caractérisé***
***en ce que*** l'élément profilé comprend des moyens pour relier le corps de base (11) de support à la partie rapportée (12) de support, le corps de base (11) de support et la partie rapportée (12) de support étant collés et/ou soudés par l'intermédiaire de l'élément profilé.

2. Élément filtrant selon la revendication 1,
***caractérisé***
***en ce que*** l'élément profilé est conformé en saillie profilée (40) qui forme saillie sur le corps de base (11) de support et/ou sur la partie rapportée (12) de support, et
***en ce que*** sur la partie rapportée (12) de support sur le corps de base de support (11) est respectivement prévu un évidement correspondant (22, 41) et/ou une contrepartie correspondante, dans lequel, respectivement dans laquelle, s'engage l'élément profilé.

3. Élément filtrant selon l'une quelconque des revendications précédentes, ***caractérisé en ce que*** le milieu filtrant (5) est coudé au moins une fois au niveau du support (1).

4. Élément filtrant selon l'une quelconque des revendications précédentes, ***caractérisé en* ce *que*** le corps de base (11) de support et/ou la partie rapportée (12) de support est/sont réalisé(s) annulaire(s).

5. Élément filtrant selon l'une quelconque des revendications précédentes, ***caractérisé en ce que*** le milieu filtrant (5) est relié au support (1) par venue de matière, en particulier soudé et/ou collé.

6. Élément filtrant selon l'une quelconque des revendications précédentes, *caractérisé*
*en ce qu*'il est conformé en plaque de presse filtrante et/ou
*en ce que* le support (1) est placé sur un tube d'écoulement de filtre.

7. Élément filtrant selon l'une quelconque des revendications précédentes, ***caractérisé***
***en ce que*** le milieu filtrant (5) est muni d'au moins un trou (6) et *en ce que* le milieu filtrant (5) est fixé au niveau du trou (6) sur le support (1).

8. Élément filtrant selon l'une quelconque des revendications précédentes, ***caractérisé en ce que*** le support (1) est réalisé oblong et/ou s'étend le long d'au moins un bord du milieu filtrant (5).

9. Élément filtrant, avec
- un milieu filtrant (5), en particulier un textile filtrant, et
- au moins un support (1) sur lequel est fixé le milieu filtrant (5),
- dans lequel le support (1) comprend un corps de base (11) de support et une partie rapportée (12) de support,
- dans lequel le milieu filtrant (5) est placé au moins par sections entre le corps de base (11) de support et la partie rapportée (12) de support, et
- dans lequel sur le corps de base (11) de support et/ou la partie rapportée (12) de support est formé au moins un élément profilé pour tenir le milieu filtrant (5) par engagement positif et/ou par adhérence, l'élément profilé étant conformé en ergot de maintien (21) qui traverse le milieu filtrant (5),
***caractérisé***
***en ce que*** l'élément profilé comprend des moyens pour relier le corps de base (11) de support à la partie rapportée (12) de support, l'élément profilé étant conformé à la manière d'un contre-crochet sous forme de saillie profilée, qui forme saillie sur le corps de base (11) de support et/ou sur la partie rapportée (12) de support, et
***en ce que*** sur la partie rapportée (12) de support sur le corps de base (11) de support est respectivement prévu un évidement correspondant (22, 41) et/ou une contrepartie correspondante, dans lequel, respectivement dans laquelle, s'engage l'élément profilé en forme de contre-crochet.

10. Procédé de filtration d'un liquide, ***caractérisé en ce que*** le liquide est envoyé à travers un milieu filtrant (5) d'un élément filtrant selon l'une quelconque des revendications précédentes.
